# EUROPEAN PATENT APPLICATION

(11) **EP 1 747 710 A1**
(43) Date of publication of application: **31.01.2007**
(21) Application number: 05425545.0
(22) Date of filing: 26.07.2005
(51) Int. Cl.: A01G 3/037, B26B 15/00

(54) **Pruning assembly**

(71) Applicant: Cecchi, Daniela, 71100 Foggia (IT); Cecchi, Marco, 71100 Foggia (IT); Cecchi, Sabrina, 71100 Foggia FG (IT)
(72) Inventor: Cecchi, Daniela, 71100 Foggia (IT); Cecchi, Marco, 71100 Foggia (IT); Cecchi, Sabrina, 71100 Foggia FG (IT)
(74) Representative: Leone, Mario

(57) **Abstract**

An assembly (100) for mechanized pruning and the like, particularly easy to handle and versatile, and comprising: a cutting device (1), comprising: a cutting unit (2) having a first blade (5A) and a second blade (6A) suitable for carrying out successive cutting cycles; a handgrip; and a control (14) for operating said cutting unit (2); and means for actuating said cutting unit comprising: a motor (22); means (40) for transforming the motion generated by the motor into a reciprocating motion; means for the remote transmission of said reciprocating motion to at least one of said blades (6A), said motor (22) and means (40) for transforming the motion generated by the motor into a reciprocating motion being incorporated into an actuator device (21) to which it is applicable said cutting unit (2) or a further cutting unit, comprising a respective handgrip (24) and a further control (214) for operating the cutting unit applied to the actuator device (21); said transmission means being partially separable from said actuator device (21).

## Description

The present invention relates to an assembly for mechanized pruning, in particular intended for pruning branches, tendrils, bushes etc., therefore to be used mainly in agriculture and/or for gardening. Hence, the assembly according to the present invention finds useful employ in the manufacturing of machines intended for the agricultural field, e.g. for olive-, wine-, fruit-growing; and for the nursery and the forestry fields.

Pruning, or anyhow tending to plants requiring the cutting of branches, is usually carried out with the use of shears or scissors.

Evidently, manually operated implements entail the well-known drawbacks of requiring remarkable physical efforts and of an operator's tiring, especially when used over lengthy periods of time. Moreover, the use of manually operated devices is not always possible; suffice it to consider situations in which there have to be cut branches in locations not easily reachable even by using ladders.

Some of these drawbacks are reduced or eliminated through the use of mechanized cutting apparatuses, powered electrically, mechanically, etc.

However, also mechanized apparatuses, at least the known ones, entail some drawbacks making them not always usable in lieu of the manually operated ones.

In particular, it has to be noted that surely a mechanized cutting apparatus is bulkier and heavier than an equivalent manually operated one, necessarily having to provide actuation mechanisms, motors, powering devices, etc.

In order to overcome this drawback, it has been contrived to miniaturize the motors and the actuation devices used to operate the blades; however, the result attained is less than satisfactory, thereby forcing operators to endure a remarkable effort, especially when engaged in lengthy steps of pruning, vineyard or orchard maintenance, etc.

Moreover, such devices proved scarcely flexible in the use on high trees and branches, where the device requires to be driven and operated at a remarkable distance off the ground. For this reason, the operator cannot do without ladders and the like, making his/her activity hazardous.

The technical problem underlying the present invention lies in providing a pruning assembly allowing to overcome the drawbacks mentioned with reference to the state of the art.

Such a problem is solved by an assembly for mechanized pruning and the like, comprising:
* a cutting device, comprising: a cutting unit having a first blade and a second blade suitable for carrying out successive cutting cycles; a handgrip; and a control for operating said cutting unit; and
* means for actuating said cutting unit, comprising: a motor; means for transforming the motion generated by the motor into a reciprocating motion; means for the remote transmission of said reciprocating motion to at least one of said blades;
said motor and means for transforming the motion generated by the motor into a reciprocating motion being incorporated into an actuator device to which it is applicable said cutting unit or a further cutting unit, comprising a respective handgrip and a further control for operating the cutting unit applied to the actuator device; said transmission means being partially separable from said actuator device.

Therefore, the assembly according to the invention provides a cutting device independent from the motorization and therefore more light-weight and versatile. Moreover, the actuator device of the assembly is operable as an autonomous cutting device in particular operating configurations.

Further advantages, as well as the features and the operation modes of the present invention will be made apparent in the following detailed description of some embodiments thereof, given by way of a non-limiting example and making reference to the figures of the annexed drawings, wherein:
* figure 1 is a perspective view of the pruning assembly according to the invention, illustrating the various components of the assembly;
* figure 2 is a partially sectional perspective view of a component of the assembly of figure 1;
* figure 3 is a partially sectional perspective view of another component of the assembly of figure 1;
* figure 4 is a partially sectional perspective view of the component of figure 3;
* figure 5 is a perspective view of the component of figure 3 in a different operating configuration;
* figure 6 is a schematic view of the kinematic mechanism of transformation into reciprocating motion used in the embodiment of figure 1; and
* figures 7 to 9 are perspective views illustrating various operating configurations of the assembly of figure 1.

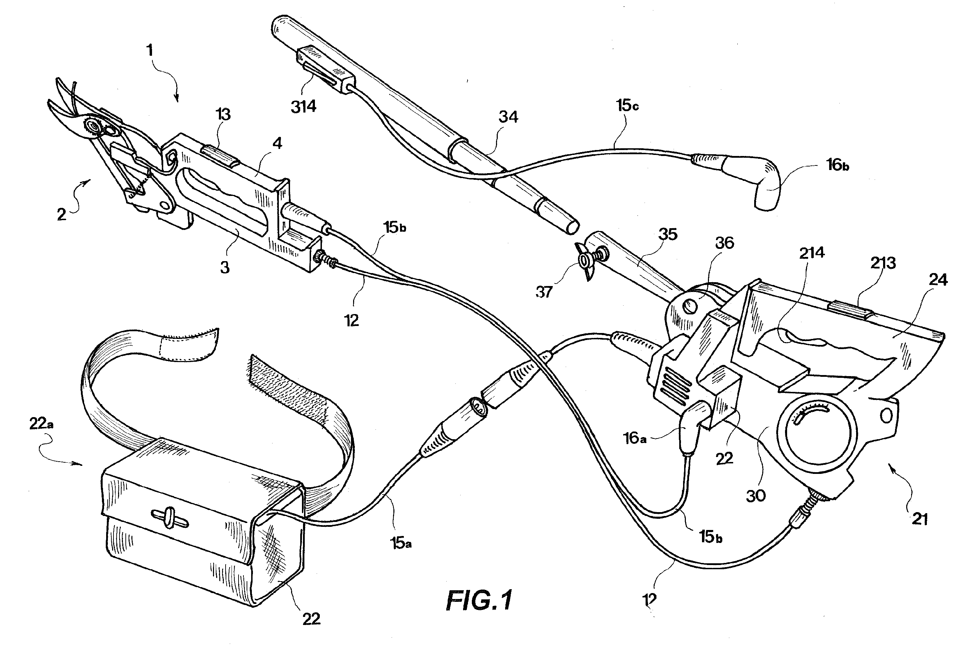

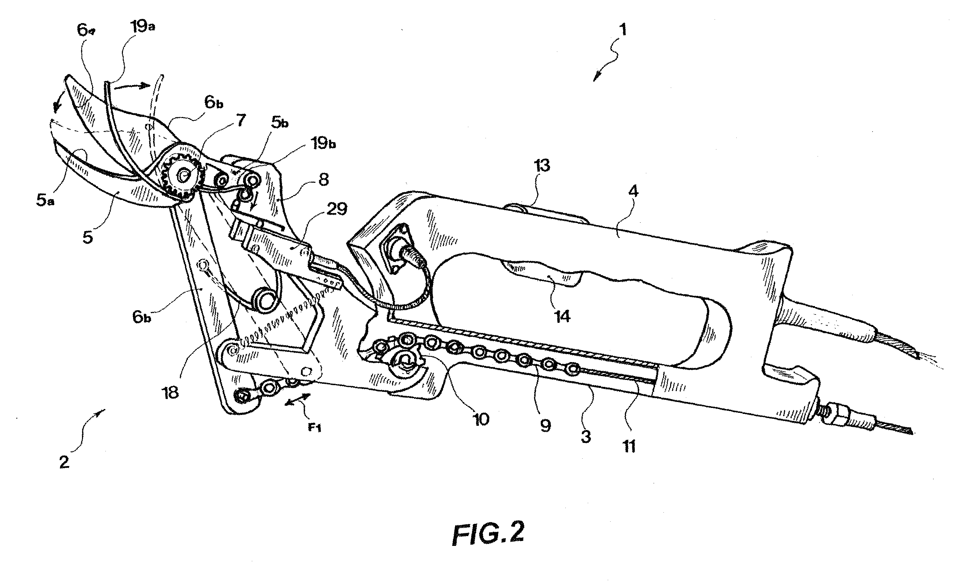

Initially referring to figures 1 and 2, a mechanized pruning assembly 100 according to an embodiment of the present invention is schematically divisible into a few main portions. In particular, there can be recognized a cutting device 1 comprising (figure 2) a cutting unit 2 and a main body comprising a housing portion 3, suitable for housing transmission members 9, 10, 11 for transmitting motion, which will be described hereinafter, and a handgrip 4.

The cutting unit 2, preferably shaped like a scissor or a shear, comprises two arms 5 and 6. The two arms are hinged therebetween at a fulcrum pin 7.

The arm 5 is a stationary arm having a first cutting portion 5A, or first blade, cooperating with a corresponding second cutting portion 6A, or second blade, of the arm 6 that instead is the movable arm of the cutting unit 2.

Hence, the opposite end 5B of the fixed arm 5 is rigidly connected to a support 8 obtained onto the housing portion 3, whereas the end 6B of the movable arm 6 is mechanically connected to a motor (not shown in figure 2) by means of the members for transmitting motion.

Therefore, said members 9, 10, 11 are suitable for transmitting a reciprocating motion to the arm 6, as indicated by arrow F1 in figure 1, to which there corresponds a cutting motion of the cutting portions of the scissor.

The operation of the cutting motion is controlled by the user, via an operation control 14 located on the handgrip 4. The operation control, in particular a pushbutton, is provided with a safety mechanism that can block its motion, internal to the handgrip 4 and operable through a further control 13.

The operation control 14, connected e.g. to a switch, suitably controls the operation of a motor in a manner such that, by means of the transmission members, the cutting unit carries out a full cutting cycle.

The arrangement of the parts constituting the device 1 is such as to functionally separate them, though obviously they are joined and connected thereamong. In particular, the handgrip 4 is totally distinct, physically and functionally, from the cutting unit 2 and above all from the housing portion 3 of the transmission members.

Of course, their arrangement is not random, nor is it selected as any one alternative equivalent to other solutions. On the contrary, such an arrangement has been specifically designed in a manner such as to optimize the operation of the device according to the present invention.

In fact, it has to be pointed out that the motion of the transmission members 9, 10, 11 is substantially a reciprocating one, translational along a direction of L1 that can be identified by the housing portion 3 of the transmission members. Accordingly, the entire device will be subject to vibration and stresses along said direction.

First of all, the physical separation of the handgrip portion with respect to the body of the device, and in particular of the portion housing the transmission members, provides an ergonomic handgrip handle, therefore easy to hold and less subject to vibrations.

Moreover, the manufacturing of the handgrip 4 along a line L2, parallel to L1, allows the operator to better absorb the vibrations and/or the stresses. In fact, any other arrangement, from the most commonly adopted one (orthogonal to the direction of L1) to other positions of the handgrip handle, causes anyhow high stresses to the same operator's arm and to his/her joints.

Moreover, the arrangement is such that also the fulcrum 7 is arranged just along the handgrip line L2, frontally to the handgrip itself.

This entails the advantageous outcome that the operator, by holding the device, can easily exert a thrust force aimed to the cutting unit 2, a force that is maximal just along the line L2. This derives from a more natural motion, with no need to use both hands and thus entailing an easier and more effective cutting, above all less tiring for the operator.

Next, figure 2 is an overall view of a pruning assembly 20 using a cutting device 1 according to the present invention, as the one described hereto.

In particular, the assembly 20 comprises an actuator device 21, e.g., of electric type, powered by a battery pack 22 through a first power cable 15A or from the network via a patch cord. In the present embodiment, the battery pack is housed in a pouch 22A. However, it is understood that the actuator device and the related batteries may be housed in a further container wearable on by an operator, e.g. a backpack or the like.

The cutting device 1 is connected to the actuator device 21, through means for the electrical connection, corresponding to a second power cable 15B, and through means for the remote transmission of reciprocating motion having a metallic sheathed control cable 12.

The electrical connection is required for the remote operation and turning off of the actuator device through the operation control 14, whereas the mechanical connection is used for the transmission of the reciprocating motion from the power unit to the cutting unit 2. The second power cable 15B is connected to the actuator device 21 by a detachable plug 16A.

The actuator device 21 comprises a motor 22 and means for transforming the motion generated by the motor into a reciprocating motion, which will be described hereinafter. Evidently, the actuator device could make use of propellers of different kind, e.g., mechanic, pneumatic, hydraulic, etc., entailing no alteration of the inventive concept.

The motor, the means for transforming the motion generated by the motor into a reciprocating motion and the means for the remote transmission of said reciprocating motion to at least one of said blades as a whole constitute actuation means of said cutting unit 2.

Therefore, the actuator device 21 comprises its own respective handgrip 24, provided with a respective operation control 214 and a respective safety 213. The motor 22 and the means for transforming the motion generated by the motor into a reciprocating motion are in turn housed into a respective housing portion 30, whose position reciprocal to the handgrip 24 of the actuator device 21 is analogous to that described for the handgrip 4 and the housing portion 3 of the cutting device 1.

The assembly 1 further comprises a collapsible rod 34 connectable to the actuator device 21 for the purposes that will be described hereinafter. To said rod 34 there are associated a further or third operation control 314 and means for the electrical connection, represented by a third power cable 15C required for the remote operation/turning off of the actuator device 21 through the operation control 314. The third power cable 15C may be connected to the actuator device 21 by a detachable plug 16B. There may also be provided a further or third safety.

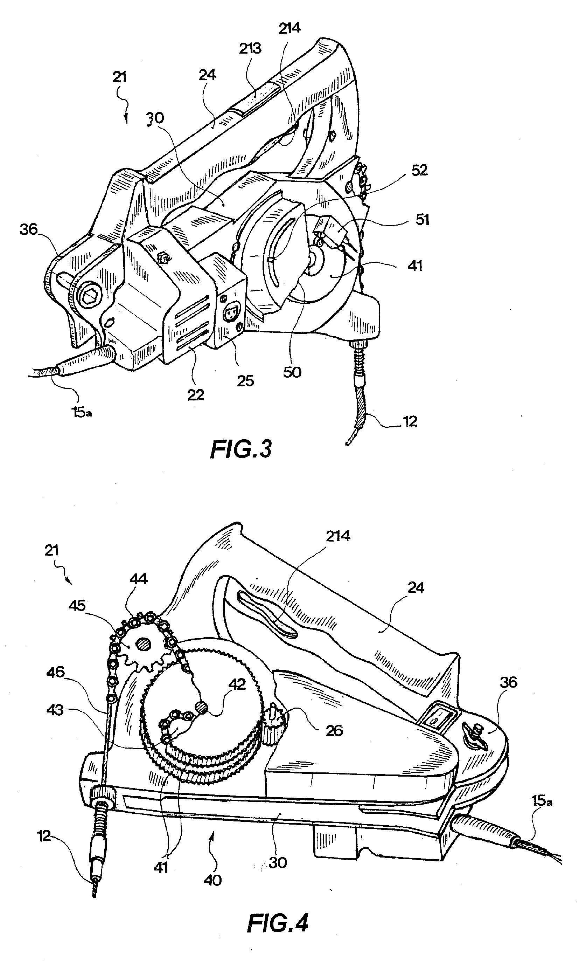

The connection between rod 34 and actuator device 21 may be made thanks to a coupling 35 connected to the device 21 by a hinge 36 of adjustable angulation and lockable in the selected position. The coupling is provided with a clamp screw 37 or the like. The coupling 35 is removable from the hinge 36 (figure 3).

Referring to figures 1 and 2, the means for transmitting the reciprocating motion comprises, at the cutting device, a portion of control cable 11 internal to the housing portion 3, connected to a first chain section 9 held in position by a first gear 10, idly mounted in the housing portion 3. The first chain section is connected to the movable arm 6B moving the movable blade 6A. Said internal portion of cable 11 is connected to said sheathed control cable 12 receiving the reciprocating motion from said transformation means.

The first chain section 9, when pulled, closes the blades 5A, 6A in a step of closing and cutting, opposing the elastic force applied by a helical spring 18 interposed between the arms 5B, 6B. When the first chain section 9 is released, the spring 18 returns the blades to an open position, whose width depends on the releasing of the chain section 9.

To the cutting unit 2 it is also associated a mechanic sensor detecting the presence of a branch or the like to be cut between the blades. Such a sensor is constituted by a feeler pin 19A extending in the area usually comprised between the blades and acting, through an extension 19B, on a microswitch 29 providing the consent to the operation of the motor 22.

The motor 22 drives in rotation, through a gearmotor 25, a pinion 26 acting on said means for transforming the motion generated by the motor 22 into a reciprocating motion, means generally indicated by 40. The latter comprises a pair of overlapped wheels 41, mounted on a pin 42 and kept at a preset distance. Between said overlapped wheels 41 there is idly mounted a second gear 43, which is then brought into a planetary motion thereby.

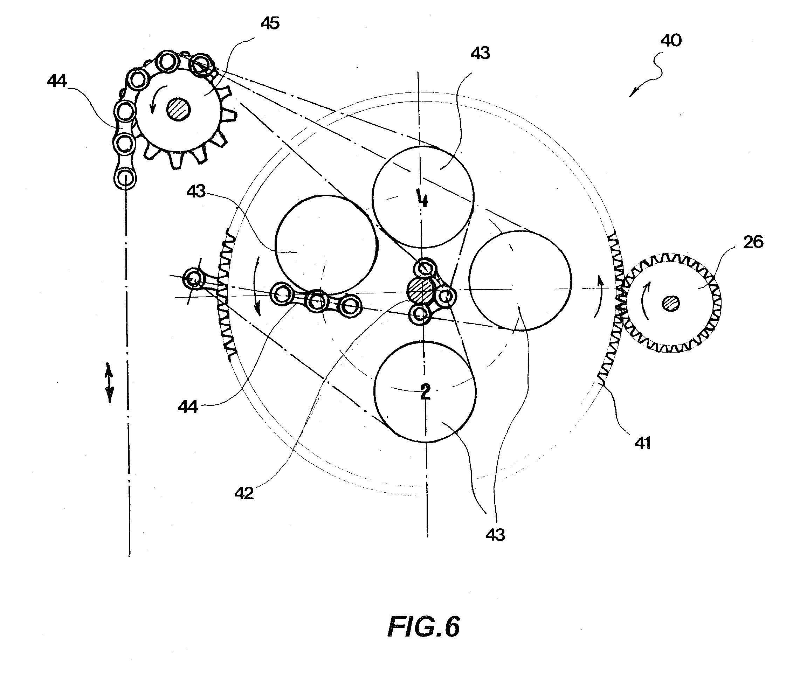

A second chain section 44 is fixed, at one end thereof, to the actuator device 21 and it is wound on the second gear and on a third gear 45 idly mounted onto the actuation device. The rotation of the overlapped wheels 41 and the revolution of the second gear 43 determine a pulling and a releasing of the second chain section, causing a reciprocating motion that is transmitted to a second portion of control cable 46, in turn connected to said sheathed cable 12. It is understood (figure 6) that to each rotation of the overlapped wheels 41 there corresponds a complete pulling and a complete releasing of the entire kinematic transmission chain constituted by the chain sections 9, 44, the control cables 46, 12, 11, the gears 43, 45 and 10, determining an opening (releasing) and a closing (pulling) of the blades.

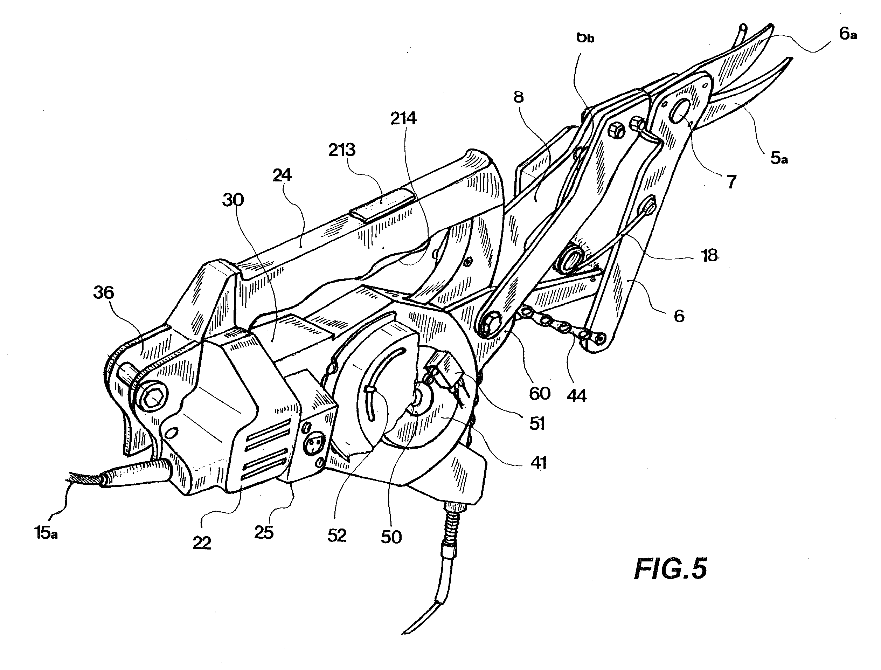

Onto the overlapped wheels 41, whose function is that of housing the chain 44 thereinside but which can optionally be replaced by a single wheel, it is mounted a cam 50 (figures 3 and 5). Said cam 50 is suitable for holding pressed the pushbutton of a second microswitch 51 in the travel section of the overlapped wheels 41 that corresponds to the final closing of the blades 5A, 6A subsequent to the cutting and the opening. In the cutting and opening configurations, the sensor detecting the presence of a branch or the like would not detect the presence nor provide the consent to the operation of the motor 22.

The angular position of the cam 50 is adjustable by release thanks to a pushbutton 52 for determining the width at which the blades 5A and 6A remain still in the opening, the motor 22 losing the consent to the operation until a branch or the like is inserted between the blades.

Referring to figure 5, it is described the mounting of a cutting unit, by way of example the abovedescribed cutting unit 2, directly onto the actuator device 21.

The actuator device 1 comprises a first fixing point 60 for said support 8 holding the stationary blade 5A and the respective arm 5B. The movable blade 6A and the respective arm 6B are hinged at a fulcrum pin 7. The movable arm 6B is connected to said second chain section 44 which, for this purpose, has been detached from the respective section of control cable 46 mechanically connected to a motor (not shown in figure 2) by means of the members for transmitting motion.

The positions of the fixing point 60 and of the support 8 are such as to ensure the operation of the blades 5A, 6A in the same way described for the cutting device. Also the positions of the handgrips and of the respective housing portions are perfectly analogous.

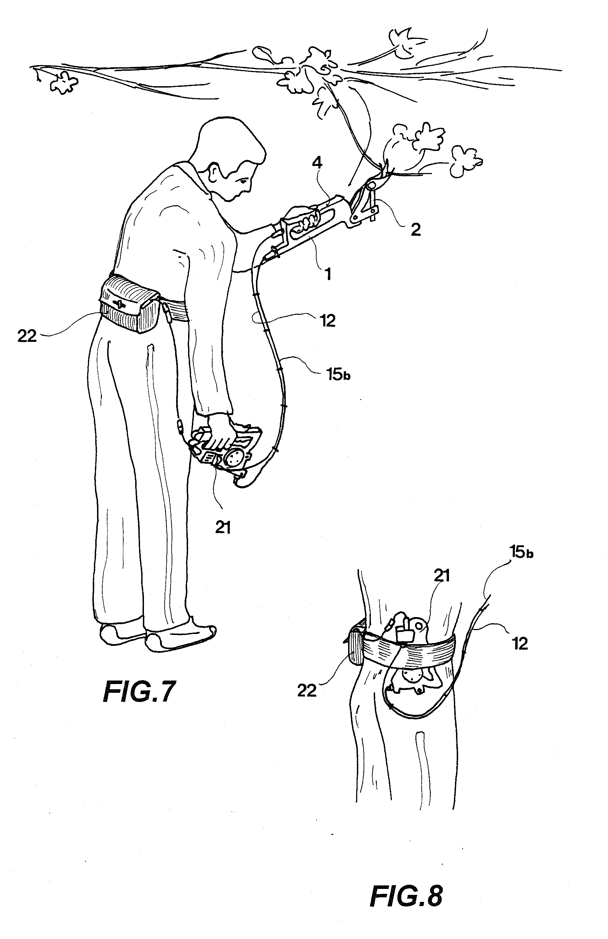

Next, figures 7 and 8 illustrate a first operation mode of a cutting apparatus 20 as the one described hereto.

In said first mode, the operator with one hand holds the cutting device 1 making the required cuts, and with the other hand holds the power unit by means of a handgrip provided therefor. The battery pack 22 could easily be belt-carried.

Alternatively, as it is shown in figure 8, also the power unit may be belt-carried or placed on the operator's back, e.g. in a backpack. In this latter case the cables will be arranged above one of the operator's shoulders, the cutting device 1 being symmetrical and holdable indifferently with the right hand or with the left hand.

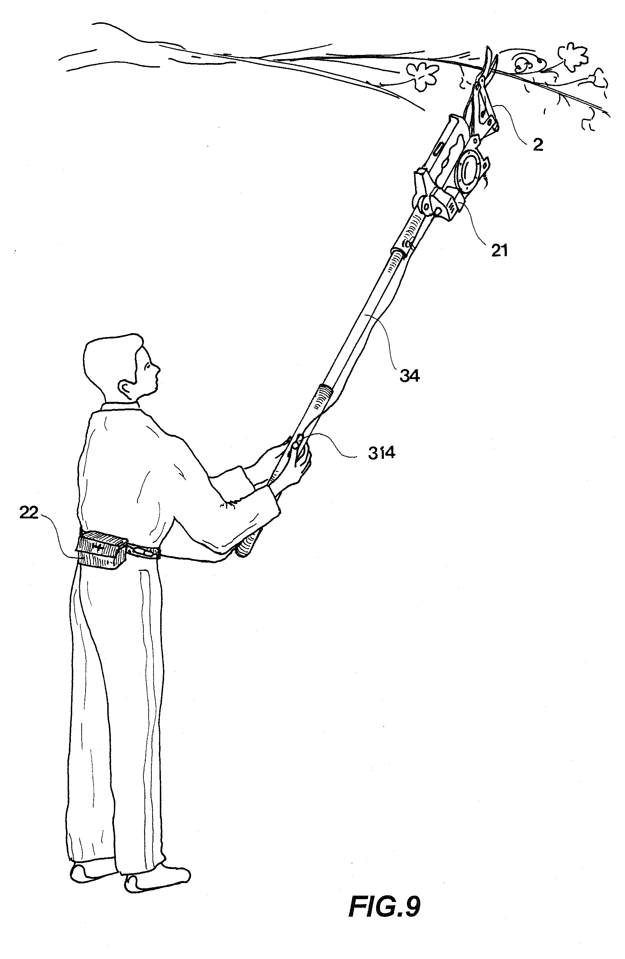

When the cutting unit 2 is connected directly to the actuator device 21, the latter may be used directly as an ordinary pruning tool, or optionally with the aid of the collapsible rod 34, by which branches at remarkable heights may be more easily reachable without necessarily using a ladder. Such an operation mode is illustrated in figure 9.

It is understood that the abovedescribed mechanical parts could be replaced by equivalent parts. In particular, the chains, of a roll-type in the above embodiment, could be replaced by toothed belts or the like.

The present invention has hereto been described according to a preferred embodiment thereof, given by way of a non-limiting example.

It is understood that there could be other embodiments, all to be construed as falling within the protective scope thereof, as defined by the annexed claims.

## Claims

1. An assembly (100) for mechanized pruning and the like, comprising:
* a cutting device (1), comprising: a cutting unit (2) having a first blade (5A) and a second blade (6A) suitable for carrying out successive cutting cycles; a handgrip; and a control (14) for operating said cutting unit (2); and
* means for actuating said cutting unit, comprising: a motor (22); means (40) for transforming the motion generated by the motor into a reciprocating motion; means for the remote transmission of said reciprocating motion to at least one of said blades (6A),
said motor (22) and means (40) for transforming the motion generated by the motor into a reciprocating motion being incorporated into an actuator device (21) to which it is applicable said cutting unit (2) or a further cutting unit, comprising a respective handgrip (24) and a further control (214) for operating the cutting unit applied to the actuator device (21); said transmission means being partially separable from said actuator device (21).

2. The assembly (100) according to claim 1, wherein the cutting device (1) has a housing portion (3) suitable for housing members for transmitting motion and a handgrip (4) distinct therebetween.

3. The assembly (100) according to claim 2, wherein the operation of the cutting motion is controlled by the operator, through an operation control (14) located on the handgrip (4).

4. The assembly (100) according to claim 1, wherein the actuator device (21) is of electric type and is powered by a battery pack (22) through a first power cable (15A).

5. The assembly (100) according to claim 4, wherein the actuator device (21) and the battery pack (22) are housed in a backpack, there being provided a second power cable (15B) and at least one sheathed control cable (12) arranged above the operator's shoulder, the cutting device (1) being symmetrical and holdable with the right hand or with the left hand.

6. The assembly (100) according to claim 1, comprising a collapsible rod (34) connectable to the actuator device (21), to said collapsible rod (34) there being associated an operation control (314) and means for the electrical connection.

7. The assembly (100) according to claim 6, wherein the connection between collapsible rod (34) and actuator device (21) may be made thanks to a coupling (35) connected to the device (21) by an adjustable hinge (36).

8. The assembly (100) according to claim 1, wherein the means for transmitting the reciprocating motion comprises, at the cutting device (1), a portion of control cable (11) internal to a housing portion (3), connected to a first chain section (9) held in position by a first gear (10), idly mounted in the housing portion (3), so that the first chain section (9), when pulled, closes the blades (5A, 6A) in a step of closing and cutting, opposing the elastic force applied by a helical spring (18) and that when the first chain section (9) is released, the spring (18) returns the blades to an open position, whose width depends on the releasing of the chain section (9).

9. The assembly (100) according to claim 1, wherein to the cutting unit (2) is it also associated a mechanic sensor detecting the presence of a branch or the like to be cut between the blades.

10. The assembly (100) according to claim 1, wherein the means (40) for transforming the motion generated by the motor into a comprises at least one wheel (41), mounted on a pin (42), onto which it is idly mounted a gear (43) which is then brought into a planetary motion by the wheel (41), a chain section (44) is fixed, at one end thereof, to the actuator device (21) and it is wound on the gear (43) and on a further gear (45) idly mounted onto the actuation device (21), the rotation of the wheel (41) and the revolution of the gear (43) determining a pulling and a releasing of the chain section, causing a reciprocating motion, to each rotation of the overlapped wheel corresponding a complete pulling and a complete releasing of the entire kinematic transmission chain, determining an opening (releasing) and a closing (pulling) of the blades (5A, 6A).

11. The assembly (100) according to claim 10, wherein said at least one wheel consists in overlapped wheels (41) whose function is that of housing the chain (44) thereinside.
